# EUROPÄISCHE PATENTSCHRIFT

(11) **EP 2 673 192 B1**
(45) Veröffentlichungstag und Bekanntmachung des Hinweises auf die Patenterteilung: **01.06.2016**
(21) Anmeldenummer: 12714935.9
(22) Anmeldetag: 08.02.2012
(51) Int. Cl.: B64C 15/00, B64C 17/04, B64C 39/02, B64C 39/06

(54) **FLUGKÖRPER**
FLYING OBJECT
ENGIN AÉROSPATIAL

(30) Priorität: 11.02.2011 DE 102011000651
(43) Veröffentlichungstag der Anmeldung: 18.12.2013
(73) Patentinhaber: Voss, Andreas, 21220 Seevetal OT Holtorfsloh (DE)
(72) Erfinder: Voss, Andreas, 21220 Seevetal OT Holtorfsloh (DE)
(74) Vertreter: Glück Kritzenberger Patentanwälte PartGmbB
(86) Internationale Anmeldenummer: PCT/DE2012/100026
(87) Internationale Veröffentlichungsnummer: WO 2012/107034

(56) Entgegenhaltungen:
- WO-A1-2008/007147
- WO-A2-2009/069109
- WO-A2-2009/095696
- DE-U1- 29 502 677
- US-A- 1 943 774
- US-A1- 2005 173 592

## Beschreibung

Die Erfindung betrifft einen Flugkörper, insbesondere einen ferngesteuerten Kleinflugkörper mit mindestens einer Auftriebsfläche, mit mindestens einem Propellerantriebspaar, und mit einem Gewichtselement, dessen Lage zum Verändern des Schwerpunktes des Flugkörpers in Längsrichtung des Flugkörpers veränderbar ist, gemäss dem Oberbegriff des Anspruchs 1.

Ein derartiger Flugkörper ist aus der WO 2008/007147 A1 bekannt. Hier wird ein unter dem Flugkörper angeordnetes Pendel als Gewichtselement eingesetzt. Bei einer geeigneten Positionierung des Pendels ist ein Schwebezustand des Flugkörpers realisierbar. Weiter ist dieser Flugkörper mit einem Tragwerk, Leitwerk und jeweils eigenen Steuerflächen ausgestattet.

Die US-Patentanmeldung US 2005/0173592 A1 offenbart ein geschlossenes Tragflächenelement für Flugzeuge.

Ferner offenbart Druckschrift DE 295 02 677 U1 ein Kompaktflugzeug mit Tragflügeln und Kopfflügeln, die eine geschlossene Flügelkonstruktion ausbilden. Zuletzt offenbart die Druckschrift WO 2009/095696 A2 ein Flugobjekt, an dem an einem Tragflügel mehrere Antriebseinheiten drehgelenkig angeordnet sind. Nachteilig ist hierbei, dass derartige Flugkörper bzw. Kleinflugkörper erst nach einer längeren Übungszeit sicher bewegt werden können. Zudem sind derartige Flugkörper, beispielsweise aufgrund eines Heckauslegers für ein Leitwerk und/oder der pendelartigen Anordnung des Gewichtselementes relativ sperrig. Ein Transport des Flugkörpers wird hierdurch erschwert. Weiter besteht die Gefahr, dass der Flugkörper beim Transport und/oder einem ungünstigen Flugmanöver leicht beschädigt werden kann.

Hierdurch werden die Einsatzmöglichkeiten eines Flugkörpers, beispielsweise als Drohne zur Aufklärung, erheblich eingeschränkt.

Es ist daher das der Erfindung zugrunde liegende Problem, einen Flugkörper, insbesondere einen fernsteuerbaren Kleinflugkörper der eingangs genannten Art derart weiter zu entwickeln, dass eine kompaktere und robustere Bauweise bei verbesserten Flugeigenschaften realisiert ist. Ausgehend von den Merkmalen des Oberbegriffes des Patentanspruches 1 wird die Aufgabe durch dessen kennzeichnende Merkmale gelöst.

Besonders vorteilhaft ist beim erfindungsgemäßen ferngesteuerten Kleinflugkörper die Auftriebsfläche oberhalb einer durch die Drehachsen der Propellerantriebe gebildeten Ebene zum Erzeugen einer Auftriebskraft, insbesondere zum Starten und/oder Landen aus dem Stand, angeordnet ist.

Hierdurch ist eine sehr kompakte Bauweise realisierbar. Zudem entsteht durch die vorgeschlagene Anordnung der Auftriebsfläche in Bezug auf die Propellerantriebe bereits im Stand eine hohe Auftriebskraft, die eine sehr geringe Start- und/oder Landegeschwindigkeit, insbesondere aufgrund des Custer-Effektes, begünstigt. Insbesondere ist der Flugkörper als Senkrechtstarter und/oder als Senkrechtlander geeignet. Der Begriff Propeller wird stellvertretend auch für Luftschrauben, Rotoren oder andere Formen aerodynamischer Motoren verwendet

Vorzugsweise ist die Auftriebsfläche als eine obere Auftriebsfläche über einer unteren Auftriebsfläche angeordnet ist, wobei insbesondere die obere Auftriebsfläche und die untere Auftriebsfläche zum Ausbilden eines rumpflosen Flugkörpers in einem einzigen geschlossenen Tragflügel integriert sind. Bei dem Konzept des geschlossenen Tragflügels, im Englischen auch "closed wing" genannt, sind die obere Auftriebsfläche und die untere Auftriebsfläche an zwei voneinander abgewandt angeordneten Auftriebsflächenenden, insbesondere über die gesamte Tiefe der obere Auftriebsfläche und/oder unteren Auftriebsfläche mittels Seitenflächen, fest miteinander verbunden und voneinander beabstandet angeordnet. Auf einen Rumpf wie bei konventionellen Flugkörpern kann verzichtet werden. Dies begünstigt ein stabiles und damit verbessertes Flugverhalten. Der Flugkörper ist somit leichter steuerbar. Die Bedienung beispielsweise eines derartigen ferngesteuerten Kleinflugkörpers durch eine Person ist schneller erlernbar. Zudem ist durch den geschlossenen Tragflügel eine kompaktere und robustere Bauweise realisiert.

Der Flugkörper weist ein geringes Gewicht, insbesondere von weniger als 1 kg, auf. Zudem wird der Flugkörper im Wesentlichen durch den Tragflügel gebildet. Die Gefahr einer Beschädigung des Flugkörpers, insbesondere als unbemannter und ferngesteuerter Kleinflugkörper, beim Transport und/oder einem ungünstigen Flugmanöver ist hierdurch reduziert. Vorzugsweise ist der Flugkörper als ein Nurflügler ausgebildet. Bei der Konstruktion als Nurflügler oder Quasi-Nurflügler werden hervorstehende Bauteile, wie beispielsweise ein Heckausleger, weitgehend vermieden und die Gefahr einer Beschädigung beim Transport oder im Flug ist weiter reduziert. Die obere Auftriebsfläche und die untere Auftriebsfläche können einander vollständig überlappend über einander angeordnet sein, wodurch eine noch kompaktere Bauweise ermöglicht ist. Insbesondere stabilisiert sich der Flugkörper im Flug selbst und/oder ein Strömungsabriss wird weitgehend vermieden.

Nach einer weiteren Ausführungsform ist der geschlossene Tragflügel als ein Ringflügel (engl. ring wing) oder ein Rechteckflügel (engl. box wing) ausgebildet. Vorzugsweise ist der Ringflügel als ein vertikaler Ringflügel ausgebildet, so dass sich eine in der vorgesehenen Flugrichtung nach vorne und hinten offene Röhre oder ein offener Ring ergibt. Ringflügel oder Rechteckflügel sind bekannte Tragflügelkonzepte, die eine robuste Konstruktion und/oder eine stabiles Flugverhalten begünstigen. Zudem zeigen derartige Tragflügelkonstruktionen gute Auftriebseigenschaften, wodurch niedrige Startgeschwindigkeiten ermöglicht sind. Die Auftriebsflächen und/oder der Tragflügel können aus einem kostengünstig herzustellenden und leicht zu transportierenden Folienmaterial bestehen. Bei der Verwendung von Folienmaterial kann dieses zum Transport einfach aufgerollt werden. Zur Montage wird es einfach abgerollt und auf eine Rahmenstruktur aufgezogen. Alternativ oder zusätzlich zu der Verwendung eines Folienmaterials ist auch der Einsatz von Kohlefasermaterialien oder anderen geeigneten Faserverbundwerkstoffen denkbar. Hierdurch wird eine hohe Stabilität bei geringem Gewicht begünstigt.

Gemäß einer Weiterbildung sind die obere Auftriebsfläche, die untere Auftriebsfläche und/oder der Tragflügel starr, folienartig oder aufblasbar ausgebildet. Eine starre Konstruktion der Auftriebsflächen und/oder des Tragflügels hat den Vorteil einer besonders stabilen und robusten Konstruktion. In einer alternativen Ausführungsform können die Auftriebsflächen und/oder der gesamte Tragflügel aufblasbar ausgebildet sein, wodurch der Flugkörper zum Transport besonders Raum sparend verpackt werden kann. Für den Flugeinsatz können die Auftriebsflächen und/oder der Tragflügel mittels eines strömenden Luftstroms, beispielsweise wie bei einem Paragleiter, selbstaufblasend ausgebildet sein oder aus aufblasbaren und verschließbaren Kammern oder Tanks aufgebaut sein. Die Kammern oder Tanks können mit Luft oder mit einem Betriebsmittel zum Versorgen eines Antriebes und/oder einer Energieversorgungseinheit für den Flugkörper befüllt sein. Beispielsweise können die Kammern oder Tanks Wasserstoff zum Betreiben einer dem Flugkörper zugeordneten Brennstoffzelle enthalten.

Vorzugsweise sind die Propeller des Propellerantriebspaars zum Erzeugen eines Luftstroms über der oberen Auftriebsfläche und/oder der unteren Auftriebsfläche in Längsrichtung des Flugkörpers vor oder hinter den beiden Auftriebsflächen angeordnet. Somit sind zwei Propeller zweier Propellerantriebe in Bezug auf die vorgesehene Flugrichtung vor oder hinter den einer oder mehreren Auftriebsflächen und/oder dem Tragflügel positioniert. Vorzugsweise sind zwei oder mehr Propellerantriebspaare vorgesehen. Vorzugsweise sind ein oder mehrere Propellerantriebspaare koaxial angeordnet. Im Betrieb wird durch die sich drehenden Propeller bereits im Stand oder bei einer sehr geringen Fluggeschwindigkeit des Flugkörpers Luft mit hoher Geschwindigkeit über die beiden Auftriebsflächen des Tragflügels geführt und/oder gesaugt. Hierdurch wird eine besonders niedrige Startgeschwindigkeit erreicht. Bei einer Anordnung von einer oberen Auftriebsfläche, die über einer oberen Auftriebsfläche angeordnet ist, kann eine etwa doppelt so große Fläche zur Erzeugung des Auftriebes genutzt, wie bei einer Konstruktion mit nur einer einzigen Auftriebsfläche. Vorzugsweise ist der Flugkörper als ein Kleinflugkörper aus der Hand einer Person startbar. Insbesondere ist der Flugkörper als Senkrechtstarter und/oder Senkrechtlander VTOL-fähig ausgebildet (engl. VTOL: vertical take-off and landing).

Vorzugsweise ist das Propellerantriebspaar zwischen der oberen Auftriebsfläche und der unteren Auftriebsfläche angeordnet. Hierdurch wird die Gefahr einer Beschädigung der Propellerantriebe reduziert, da die Propellerantriebe von den beiden Auftriebsflächen und/oder dem Tragflügel mindestens teilweise umgeben bzw. ummantelt sind. Zudem sind bei einer derartigen Anordnung der Propellerantriebe geringe Propellerdurchmesser für ein gleichzeitiges Anströmen der oberen und unteren Auftriebsfläche realisierbar.

Weiter sind die obere Auftriebsfläche und/oder die untere Auftriebsfläche zwischen der Drehachse der Propellerantriebe und der maximalen Propellerspannweite der Propeller angeordnet. Hierdurch wird gewährleistet, dass im Betrieb mittels der Propeller Luft mit hoher Geschwindigkeit über die Oberseiten der unteren Auftriebsfläche und/oder der oberen Auftriebsfläche geleitet wird. Hierdurch wird eine niedrige Startgeschwindigkeit, insbesondere eine VTOL-fähige Ausbildung des Flugkörpers, begünstigt.

Vorzugsweise sind die Propeller der Propellerantriebe mindestens teilweise im Bereich des Propellerumfanges von mindestens einem Propellerschutz ummantelt. Hierdurch wird das Risiko einer Beschädigung der Propeller beim Transport und/oder im Flugeinsatz reduziert. Die Propeller mehrerer Propellerantriebe können jeweils separat von einem Propellerschutz, insbesondere in der Ausbildung als ein Mantelpropeller, ummantelt sein oder die Propeller sind von einem einzigen Propellerschutz gemeinsam ummantelt. Ist für jeden Propeller ein separater Propellerschutz vorgesehen, können die einzelnen Propellerschutzelemente mittels Verstrebungen miteinander verbunden sein.

Weiter kann der Propellerschutz fest mit einer oder mehreren Auftriebsflächen oder dem Tragflügel, insbesondere mittels Verstrebungen, verbunden sein, wodurch sich eine insgesamt robuste und kompakte Konstruktion ergibt. Vorzugsweise ist die Konstruktion des Flugkörpers als semi-starr ausgebildet. Hierdurch wird die Gefahr durch Resonanzeffekte deutlich reduziert. Insbesondere liegt der Tragflügel innerhalb des Umfangs des Propellerschutzes. Insbesondere wird die maximale Höhe und Breite des Flugkörpers durch die Höhe und Breite des Propellerschutzes bestimmt.

Vorzugsweise ist der Standschub der ummantelten Propeller größer als der Standschub von nicht ummantelten Propellern, wodurch das Erreichen einer geringeren Startgeschwindigkeit weiter begünstigt ist. Der Propellerschutz kann beispielsweise eine zylindrische, rohrförmige, einen zu der Tragflügelform oder Auftriebsfläche ähnlichen oder identischen Querschnitt aufweisen. Vorzugsweise hat der Tragflügel eine geringere Höhe als der Propellerschutz und ist gegenüber einer Mittellinie des Propellerschutzes nach unten verschoben. Hierdurch wird eine gute Anströmung der Oberseite der oberen Auftriebsfläche und/oder unteren Auftriebsfläche begünstigt.

Gemäß einer Weiterbildung ist das Gewichtselement mittig, insbesondere zwischen den Propellerantrieben, ein Gewichtselement an der Auftriebsfläche angeordnet. Mittels des Gewichtselementes ist es beispielsweise möglich eine Trimmung des Flugkörpers um seine Querachse, insbesondere zum Ausgleich unterschiedlicher Lastverteilungen, vorzunehmen. Das Gewichtselement dient vorzugsweise der Stabilisierung gegenüber äußeren Einflüssen und/oder negativen aerodynamischen Effekten. Weiter kann das Gewichtselement zum Steuern des Flugkörpers um seine Querachse genutzt werden, wodurch die Flughöhe steuerbar ist. Insbesondere ist aufgrund eines in seiner Lage veränderbaren Gewichtselementes ein Heckausleger für ein Leitwerk, wie beispielsweise ein Höhenleitwerk und/oder Seitenleitwerk verzichtbar.

Das Gewichtselement kann linear in Längsrichtung des Flugkörpers entlang seiner Mittellinie mittels eines Verschiebemechanismus verschiebbar oder um eine Querachse des Flugkörpers mittels eines Schwenkmechanismus verschwenkbar sein, beispielsweise mittels eines Servomotors oder eines Ultraschallmotors. Vorzugsweise ist das Gewichtselement unterhalb der, insbesondere oberen, Auftriebsfläche und um eine Querachse schwenkbar gelagert mit der Auftriebsfläche und/oder dem Tragflügel verbunden. Hierdurch sind das Gewichtselement und der Schwenkmechanismus mindestens teilweise durch die obere Auftriebsfläche und/oder die untere Auftriebsfläche bzw. dem Tragflügel vor äußeren Einflüssen geschützt. Das Gewichtselement kann zur Aufnahme von Ausrüstungselementen, wie beispielsweise einer Steuerung, Sensoren, Energiezellen, Nutzlasten, etc., ausgebildet sein.

Nach einer weiteren Ausführungsform ist eine Steuerung zum Steuern des Flugkörpers, insbesondere mittels einer Fernbedienung, vorgesehen, wobei die Fluglage in Bezug auf eine Längsachse und/oder eine Hochachse des Flugkörpers mittels einer Differenz zwischen den Antriebskräften, vorzugsweise zwischen den Drehzahlen oder Propelleranstellwinkeln der Propellerantriebe, einstellbar ist. Weiter kann die Fluglage in Bezug auf die Querachse mittels einer Verlagerung des Gewichtselementes einstellbar sein. Somit ist eine Veränderung der Fluglage um eine Längsachse, eine Hochachse und/oder eine Querachse des Flugkörpers ohne Steuerflächen realisierbar. Hierdurch ist die Gefahr einer Beschädigung beim Transport und/oder im Flug des Flugkörpers verringert. Die Fluglage des Flugkörpers wird nur über den Schub, insbesondere die Drehzahl der Propellerantriebe und über die Gewichtsverteilung in Längsrichtung des Flugkörpers gesteuert.

Für die Steuerung über die Drehzahl ist es notwendig, dass mindestens ein oder mehrere Paare von Propellerantrieben vorgesehen sind. Hierbei sind die Propellerantriebe eines Propellerantriebspaares voneinander abgewandt aus der Mitte des Flugkörpers angeordnet. Wird beispielsweise die Drehzahl eines ersten Propellerantriebes reduziert, verringert sich zugleich die durch diesen Propellerantrieb erzeugte Antriebskraft. Wird zugleich die Drehzahl eines zweiten Propellerantriebes auf dem ursprünglichen Niveau des ersten Propellerantriebes beibehalten oder erhöht, ist die Antriebskraft des zweiten Propellerantriebes höher als die Antriebskraft des ersten Propellerantriebes. Hierdurch dreht sich der Flugkörper um seine Hochachse in Richtung des ersten Propellerantriebes. Bei einer gewünschten Drehung um die Hochachse in Richtung des zweiten Propellerantriebs erfolgt gegenüber der Drehzahl des ersten Propellerantriebes eine Reduzierung der Drehzahl des zweiten Propellerantriebes.

Vorzugsweise sind in der Auftriebsfläche und/oder in dem Tragflügel Steuerungsmittel und/oder Energieversorgungsmittel integriert und/oder aufgedruckt. Als Steuerungsmittel ist beispielsweise mindestens eine Antenne vorgesehen. Weiter kann zusätzlich oder alternativ ein Solarelement als Energieversorgungsmittel vorhanden sein. Als Energieversorgungsmittel kann auch eine Antenne dienen, wobei Energie mittels Mikrowellen übertragen wird. Mittels der Energieversorgungsmittel können Akkumulatoren des Flugkörpers aufgeladen werden. Vorzugsweise ist das Steuerungsmittel und/oder das Energieversorgungsmittel als ein Transponder, insbesondere ein RFID (engl. radiofrequency identification), insbesondere mit Rückkanal, ausgebildet.

Nach einer auch eigenständig und unabhängig vom vorliegenden Erfindungsgegenstand denkbaren Weiterbildung, ist das Energieversorgungsmittel als ein Energieaufnahmefeld für einen Laserstrahl ausgebildet. Somit sind beispielsweise Akkumulatoren des Flugkörpers aus der Ferne mittels eines Laserstrahls aufladbar. Vorzugsweise sind mehrere, insbesondere nebeneinander angeordnete, Energieaufnahmefelder vorgesehen. Hierdurch ist eine selbstjustierende Führung des Laserstrahls realisierbar, wodurch der Aufladeprozess vereinfacht ist. Weiter kann bei mehreren nebeneinander angeordneten Energieaufnahmefeldern eine Steuerung mit einer automatischen Abstandsregelung vorgesehen sein. Hierbei gilt, je weiter der Flugkörper entfernt ist, umso breiter wird der Laserstrahl und umso mehr nebeneinander angeordnete Energieaufnahmefelder werden bestrahlt. Je näher sich der Flugkörper befindet, umso gebündelter und schmaler ist der Laserstrahl. Dies führt dazu, dass der Laserstrahl auf weniger Energieaufnahmefelder trifft. Dieser Effekt ist für eine Abstandsregelung nutzbar.

Von besonderem Vorteil ist die Verwendung eines erfindungsgemäßen Flugkörpers als ferngesteuerte Aufklärungsdrohne, wobei vorzugsweise an der Aufklärungsdrohne Überwachungsmitteln angeordnet sind. Als Überwachungsmittel können beispielsweise bildgebende Sensoren an dem Gewichtselement, einer Vorderkante der Auftriebsfläche und/oder des Tragflügels und/oder einer Vorderkante des Propellerschutzes angeordnet sein. Der Flugkörper ist durch seine kompakte und leichte Bauweise bequem durch eine Person, beispielsweise in einem Rucksack, transportierbar. Weiter sind die Flugeigenschaften derart stabil, dass die Drohne von einer Person nach einer gegenüber gängigen Flugmodellen kurzen Zeit beherrschbar ist. Hinsichtlich der Flugeigenschaften ist die geringe Startgeschwindigkeit von besonderem Vorteil. Dies erlaubt einen Start aus der Hand einer Person, wodurch der Flugkörper auch in rauem Gelände jederzeit startbereit ist. Eine spezielle Fangvorrichtung für die Landung wird so nicht benötigt.

Die Erfindung soll nachfolgend anhand von Ausführungsbeispielen in Zusammenhang mit den Figuren näher erläutert werden. Zudem ergeben sich Weiterbildungen, Vorteile und Anwendungsmöglichkeiten der Erfindung auch aus der nachfolgenden Beschreibung ein Ausführungsbeispiel und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehungen. Auch wird der Inhalt der Ansprüche zum Bestandteil der Beschreibung gemacht.

Es wird aber ausdrücklich darauf hingewiesen, dass die Erfindung keinesfalls auf die angegebenen Beispiele beschränkt sein soll. Es zeigen:
- Fig. 1: eine schematische Frontansicht eines erfindungsgemäßen Flugkörpers,
- Fig. 2: eine teilweise geschnittene, schematische Seitenansicht des erfindungsgemäßen Flugkörpers gemäß Fig. 1, und
- Fig. 3: eine teilweise geschnittene, schematische Draufsicht auf den erfindungsgemäßen Flugkörper gemäß Fig. 1 und 2.

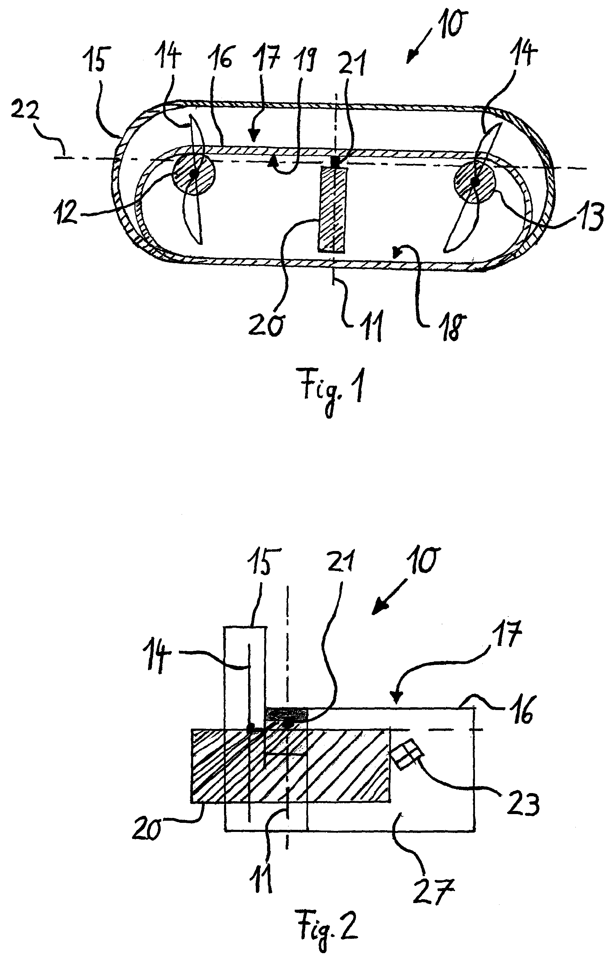

Fig. 1 zeigt eine schematische Frontansicht eines erfindungsgemäßen Flugkörpers bzw. Kleinflugkörper 10. Der Flugkörper 10 ist achssymmetrisch um eine Hochachse 11 ausgebildet und weist zwei Propellerantriebe 12, 13 mit je einem Propeller 14 auf. Die Propeller 14 sind in dem hier gezeigten Ausführungsbeispiel im Bereich des Außenumfangs der Propeller 14 von einem Propellerschutz 15 umgeben. Hierbei ist ein einziger Propellerschutz 15 für die Propeller 14 der beiden Propellerantriebe 12, 13 vorgesehen. Alternativ sind für die Propeller 14 der Propellerantriebe 12, 13 separate Propellerschutzelemente denkbar, die zur Stabilisierung miteinander verbunden sein können.

Gemäß der Frontansicht nach Fig. 1 bzw. in Bezug auf die vorgesehene Flugrichtung des Flugkörpers 10 ist hinter dem Propellerschutz 15 ein geschlossener Tragflügel 16 angeordnet. In dem hier gezeigten Ausführungsbeispiel ist der Tragflügel 16 als ein Ringflügel 16 ausgebildet. Der Flugkörper 10 ist ohne einen zusätzlichen Rumpf, nämlich rumpflos, ausgebildet. Der Tragflügel 16 hat eine obere Auftriebsfläche 17, die über einer unteren Auftriebsfläche 18 angeordnet ist. Die Höhe des Tragflügels 16 ist geringer als die Höhe des Propellerschutzes 15. In dem hier gezeigten Ausführungsbeispiel ist die Höhe des Tragflügels 16 etwa 1/3 weniger als die Höhe des Propellerschutzes 15.

Zudem ist der Tragflügel 16 gegenüber dem Propellerschutz 15 ausgehend von einer mittigen, symmetrischen Anordnung nach unten versetzt. Hierbei tritt der Tragflügel 16 jedoch nicht über den Umfang des Propellerschutzes 15 hinaus, sondern verbleibt innerhalb dieses Umfanges.

An einer Unterseite 19 der oberen Auftriebsfläche 17 sind die Propellerantriebe 12, 13 voneinander beabstandet und achssymmetrisch zur Hochachse 11 befestigt. Weiter ist mittig an der Unterseite 19 ein Gewichtselement 20 angeordnet. Das Gewichtselement 20 ist in dem hier gezeigten Ausführungsbeispiel mittels einer Schwenkverbindung 21 an der Unterseite 19 befestigt. Hierbei erlaubt die Schwenkverbindung 21 ein Verschwenken des Gewichtselementes 20 um eine Querachse 22.

Fig. 2 ist eine teilweise geschnittene, schematische Seitenansicht des erfindungsgemäßen Flugkörpers 10 gemäß Fig. 1 zu entnehmen. Das Gewichtselement 20 ragt in dem hier gezeigten Ausführungsbeispiel über den Propellerschutz 15 nach vorne in Richtung der in diesem Ausführungsbeispiel vorgesehenen Flugrichtung hinaus. An den voneinander abgewandt angeordneten Auftriebsflächenenden ist jeweils eine Seitenfläche 27 angeordnet, die sich über die gesamte Tiefe der oberen und unteren Auftriebsflächen 17, 18 erstreckt.

An der Seitenfläche 27 des Tragflügels 15 ist beispielhaft ein hier schematisch dargestelltes Steuerungsmittel 23 angeordnet. Das Steuerungsmittel 23 ist hier als eine in den Tragflügel 15 integrierte Antenne 23 ausgebildet und dient zum Empfang von Steuerungssignalen zum Fernsteuern des unbemannten Flugkörpers 10.

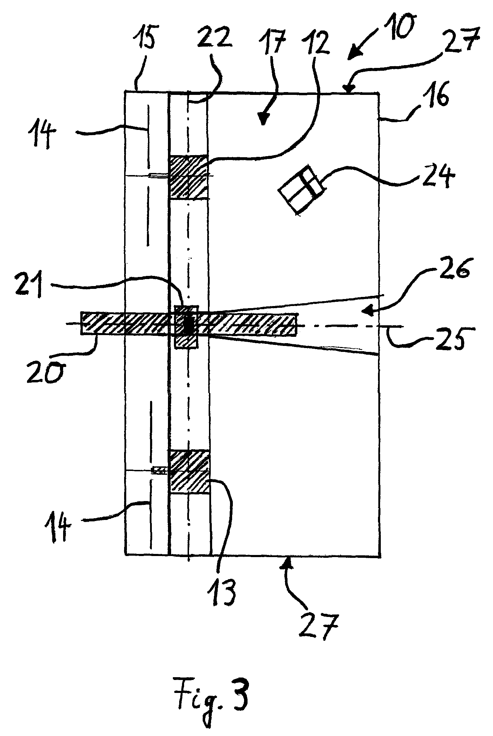

Fig. 3 zeigt eine teilweise geschnittene, schematische Draufsicht auf den erfindungsgemäßen Flugkörper 10 gemäß Fig. 1 und 2. Auf der oberen Auftriebsfläche 17 ist beispielhaft ein Energieversorgungsmittel 24 angeordnet und schematisch dargestellt. Das Energieversorgungsmittel 24 ist in dem hier gezeigten Ausführungsbeispiel als ein Solarmodul 24 ausgebildet.

Der Flugkörper 10 ist achssymmetrisch zu einer Längsachse 25 ausgebildet. Weiter weist die obere Auftriebsfläche 17 einen achssymmetrisch zu der Längsachse 25 ausgebildeten Ausschnitt 26 auf. Der Ausschnitt 26 ist im Wesentlichen V-förmig ausgebildet und verjüngt sich in Richtung des Gewichtselementes 20. Die kleinste Breite des Ausschnittes 26 entspricht der Breite des Gewichtselementes 20, um bei einem Verschwenken des Gewichtselementes 20 um die Querachse 22 ein Austreten des Gewichtselementes 20 über die obere Auftriebsfläche 17 hinaus zu ermöglichen. In dem hier gezeigten Ausführungsbeispiel weist die untere Auftriebsfläche 18 ebenfalls einen hier nicht näher dargestellten Ausschnitt 26 auf, um bei einem Verschwenken des Gewichtselementes 20 um die Querachse 22 ein Austreten des Gewichtselementes 20 über die untere Auftriebsfläche 18 hinaus zu ermöglichen.

Die Funktionsweise des Flugkörpers 10 wird anhand der Figuren 1 bis 3 nachfolgend näher erläutert:
Soll beispielsweise ein unbemannter Flugkörper 10 als eine Drohne zur Aufklärung eingesetzt werden, wird der Flugkörper mit geeigneten Überwachungsmitteln ausgerüstet. Diese Überwachungsmittel können integraler Bestandteil des Gewichtselementes 20 sein. Die für den Betrieb der Überwachungsmittel sowie für die Steuerung des Flugkörpers 10 benötigte Energie wird über Akkumulatoren und/oder einem oder mehreren Energieversorgungsmitteln 24 gewährleistet.

Die Ausmaße und das Gewicht des Flugkörpers 10 sind derart, dass das Kleinfluggerät 10 von einer einzelnen Person, beispielsweise in einem Rucksack, transportiert werden kann. Die Steuerung des Flugkörpers 10 erfolgt mittels einer Fernsteuerung, die von einer Person bedienbar ist. Die Signale der Fernsteuerung werden von dem Steuerungsmittel 23 erfasst und weitergeleitet.

Hierbei erfolgt die Steuerung derart, dass der Flugkörper 10 um die Längsachse 25 und/oder die Hochachse 11 verschwenkt wird, in dem die Propellerantriebe 12, 13 mit voneinander abweichenden Drehzahlen betrieben werden. Durch die unterschiedlichen Drehzahlen der Propellerantriebe 12, 13 erzeugen diese eine voneinander abweichende Antriebskraft, wodurch der Flugkörper 10 um seine Längsachse 25 und/oder seine Hochachse 11 gedreht wird. Auf diese Weise ist die Flugrichtung des Flugkörpers 10 steuerbar.

Um die Flughöhe des Flugkörpers 10 zu steuern, wird das Gewichtselement 20 um die Querachse 22 des Flugkörpers 10 verschwenkt. Hierdurch wird der Schwerpunkt des Flugkörpers 10 verschoben und abhängig von der Richtung der Verschwenkung gelangt der Flugkörper 10 in eine Steigposition oder in eine Sinkposition.

Somit sind für die Steuerung des Flugkörpers 10 keine Steuerflächen notwendig, wodurch der Flugkörper 10 besonders robust ist und eine hohe Einsatzbereitschaft begünstigt ist. Weiter kann auf das Vorsehen eines Heckauslegers verzichtet werden, was eine kompakte Bauweise gewährleistet.

Durch die vor oder in einer alternativen Ausführungsform hinter den Auftriebsflächen 17, 18 angeordneten Propeller 14 wird bereits im Stand Luft mit hoher Geschwindigkeit über die Auftriebsflächen 17, 18 geführt. Dies führt zu einer sehr niedrigen Startgeschwindigkeit, wodurch ein Starten und/oder Landen des Flugkörpers 10 aus bzw. in eine Hand einer Person möglich ist.

### Bezugszeichenliste:

- 10: Flugkörper bzw. Kleinflugkörper
- 11: Hochachse
- 12: Propellerantrieb
- 13: Propellerantrieb
- 14: Propeller
- 15: Propellerschutz
- 16: Tragflügel
- 17: Obere Auftriebsfläche
- 18: Untere Auftriebsfläche
- 19: Unterseite
- 20: Gewichtselement
- 21: Schwenkverbindung
- 22: Querachse
- 23: Steuerungsmittel
- 24: Energieversorgungsmittel
- 25: Längsachse
- 26: Ausschnitt
- 27: Seitenfläche

## Patentansprüche

1. Ferngesteuerter Kleinflugkörper mit mindestens einer oberen und einer unteren Auftriebsfläche (1 7, 18), mit mindestens einem Propellerantriebspaar (12, 13), und mit einem Gewichtselement (20), dessen Lage zum Verändern des Schwerpunktes des Kleinflugkörpers (10) in Längsrichtung des Kleinflugkörpers (10) veränderbar ist, wobei die obere Auftriebsfläche (17) oberhalb einer durch die Drehachsen der Propellerantriebe (12, 13) gebildeten Ebene zum Erzeugen einer Auftriebskraft angeordnet ist, wobei die obere Auftriebsfläche (17) über einer unteren Auftriebsfläche (18) angeordnet ist, **dadurch gekennzeichnet, dass** der Kleinflugkörper als Nurflügler ausgebildet ist und dass die Fluglage in Bezug auf eine Längsachse (25) und eine Hochachse (11) des Flugkörpers (10) mittels einer Differenz zwischen den Antriebskräften, vorzugsweise zwischen den Drehzahlen der Propellerantriebe (12, 13), einstellbar ist.

2. Kleinflugkörper nach Anspruch 1, **dadurch gekennzeichnet, dass** die obere Auftriebsfläche (17) und die untere Auftriebsfläche (18) zum Ausbilden eines rumpflosen Kleinflugkörpers (10) in einem einzigen geschlossenen Tragflügel (16) integriert sind.

3. Kleinflugkörper nach Anspruch 2, **dadurch gekennzeichnet, dass** der geschlossene Tragflügel (16) als ein Ringflügel oder ein Rechteckflügel ausgebildet ist.

4. Kleinflugkörper nach einem der vorhergehenden Ansprüche, **dadurch gekennzeichnet, dass** die obere Auftriebsfläche (17), die untere Auftriebsfläche (18) und/oder der Tragflügel (16) starr, folienartig oder aufblasbar ausgebildet sind.

5. Kleinflugkörper nach einem der vorhergehenden Ansprüche, **dadurch gekennzeichnet, dass** Propeller (14) des Propellerantriebspaars (12, 13) zum Erzeugen eines Luftstroms über der oberen Auftriebsfläche (1 7) und/oder über der unteren Auftriebsfläche (18) in Längsrichtung des Flugkörpers (10) vor oder hinter den beiden Auftriebsflächen (17, 18) angeordnet sind.

6. Kleinflugkörper nach einem der vorhergehenden Ansprüche, **dadurch gekennzeichnet, dass** die obere Auftriebsfläche (1 7) und/oder die untere Auftriebsfläche (18) zwischen der Drehachse der Propellerantriebe (12, 13) und der maximalen Propellerspannweite der Propeller (14) angeordnet sind, und/oder dass das Propellerantriebspaar (12, 13) zwischen der oberen Auftriebsfläche (17) und der unteren Auftriebsfläche (18) angeordnet ist.

7. Kleinflugkörper nach einem der vorhergehenden Ansprüche, **dadurch gekennzeichnet, dass** die Propeller (14) der Propellerantriebe (12, 13) mindestens teilweise im Bereich des Propellerumfanges von mindestens einem Propellerschutz (15) ummantelt sind.

8. Kleinflugkörper nach einem der vorhergehenden Ansprüche, **dadurch gekennzeichnet, dass** das Gewichtselement (20) mittig, insbesondere zwischen den Propellerantrieben (12, 13), an der Auftriebsfläche (17) angeordnet ist, wobei vorzugsweise das Gewichtselement (20) unterhalb der oberen Auftriebsfläche (1 7) und um eine Querachse (22) schwenkbar gelagert mit der oberen Auftriebsfläche (1 7) verbunden ist.

9. Kleinflugkörper nach einem der vorhergehenden Ansprüche, **gekennzeichnet durch** eine Steuerung zum Steuern des Kleinflugkörpers (10), insbesondere mittels einer Fernbedienung, wobei die Fluglage in Bezug auf die Querachse (22) mittels einer Verlagerung des Gewichtelementes (20) einstellbar ist.

10. Kleinflugkörper nach einem der vorhergehenden Ansprüche, **dadurch gekennzeichnet, dass** in der Auftriebsfläche (17, 18) und/oder dem Tragflügel (16) Steuerungsmittel (23) und/oder Energieversorgungsmittel (24) integriert und/oder aufgedruckt sind.

11. Verwendung eines Kleinflugkörpers (10) nach einem der vorhergehenden Ansprüche als ferngesteuerte Aufklärungsdrohne, wobei vorzugsweise an der Aufklärungsdrohne Überwachungsmittel angeordnet sind.

## Claims

1. A remote controlled small flying body with at least an upper and a lower lift area (17, 18), with at least a propeller drive pair (12, 13), and with a weight element (20), whose position can be varied to change the centre of gravity of the small flying body (10) in the longitudinal direction of the small flying body (10), wherein the upper lift area (17) is arranged above a plane formed by the rotational axes of the propeller drives (12, 13) in order to generate a lifting force, wherein the upper lift area (17) is arranged above a lower lift area(18), **characterized in that** the small flying body is designed as a flying wing and **in that** the flight attitude is adjustable in relation to a longitudinal axis (25) and a vertical axis (11) of the flying body (10) by means of a difference between the driving forces, preferably between the rotation speeds of the propeller drives (12, 13).

2. Small flying body according to claim 1, **characterized in that** the upper lift area (17) and the lower lift area (18) are integrated in a single closed aerofoil (16) to form a small flying body (10) without a fuselage.

3. Small flying body according to claim 2, **characterized in that** the closed aerofoil (16) is designed as an annular wing or a rectangular wing.

4. Small flying body according to any one of the preceding claims, **characterized in that** the upper lift area (17), the lower lift area (18) and/or the aerofoil (16) are designed to be rigid, film-like or inflatable.

5. Small flying body according to any one of the preceding claims, **characterized in that** in order to generate an air flow over the upper lift area (17) and/or over the lower lift area (18), propellers (14) of the propeller drive pair (12, 13) are arranged in front of or behind the two lift areas (17, 18) in the longitudinal direction of the flying body (10).

6. Small flying body according to any one of the preceding claims, **characterized in that** the upper lift area (17) and/or the lower lift area (18) are arranged between the axis of rotation of the propeller drives (12, 13) and the maximum propeller span of the propellers (14), and/or that the propeller drive pair (12, 13) is arranged between the upper lift area (17) and the lower lift area (18).

7. Small flying body according to any one of the preceding claims, **characterized in that** the propellers (14) of the propeller drives (12, 13) are at least partially enclosed by at least one propeller guard (15) in the area of the circumference of the propeller.

8. Small flying body according to any one of the preceding claims, **characterized in that** the weight element (20) is arranged centrally on the lift area (17), in particular between the propeller drives (12, 13), wherein the weight element (20) is preferably connected to the upper lift area (17) underneath the upper lift area (17) and pivotably mounted about a transverse axis (22).

9. Small flying body according to any one of the preceding claims, **characterized by** a control for controlling the small flying body (10), in particular by remote control, wherein the flight attitude can be adjusted in relation to the transverse axis (22) by a displacement of the weight element (20).

10. Small flying body according to any one of the preceding claims, **characterized in that** control means (23) and/or energy supply means (24) are integrated in and/or imprinted on the lift area (17, 18) and/or the aerofoil (16).

11. Use of a small flying body (10) according to any of the preceding claims as a remote-controlled reconnaissance drone, wherein surveillance means are preferably arranged on the reconnaissance drone.

## Revendications

1. Missile petit télécommandé avec au moins une surface de sustentation supérieure et inférieure (17, 18), avec au moins une paire d'entraînements à hélice (12, 13) et avec un élément de poids (20) dont la position peut être modifiée dans le sens longitudinal du missile (10) pour modifier le centre de gravité du missile (10), la surface de sustentation supérieure (17) étant disposée au-dessus d'un plan formé par les axes de rotation des entraînements à hélice (12, 13) pour produire une force motrice, la surface de sustentation supérieure (17) étant disposée au-dessus d'une surface de sustentation inférieure (18), **caractérisé en ce que** le missile est constitué comme une aile volante et **en ce que** l'attitude de vol par rapport à un axe longitudinal (25) et un axe vertical (11) du missile (10) peut être réglée au moyen d'une différence entre les forces motrices, de préférence entre les vitesses de rotation des entraînements à hélice (12, 13).

2. Missile selon la revendication 1, **caractérisé en ce que** la surface de sustentation supérieure (17) et la surface de sustentation inférieure (18) sont intégrées dans une voilure fermée unique (16) pour former un missile (10) sans fuselage.

3. Missile selon la revendication 2, **caractérisé en ce que** la voilure fermée (16) est constituée comme une aile annulaire ou une aile rectangulaire.

4. Missile selon l'une quelconque des revendications précédentes, **caractérisé en ce que** la surface de sustentation supérieure (17), la surface de sustentation inférieure (18) et/ou la voilure (16) sont constituées rigides, en forme de feuille ou gonflables.

5. Missile selon l'une quelconque des revendications précédentes, **caractérisé en ce que** des hélices (14) de la paire d'entraînements à hélice (12, 13) sont disposées dans la direction longitudinale du missile (10) devant ou derrière les deux surfaces de sustentation (17, 18) pour produire un flux d'air sur la surface de sustentation supérieure (17) et/ou sur la surface de sustentation inférieure (18).

6. Missile selon l'une quelconque des revendications précédentes, **caractérisé en ce que** la surface de sustentation supérieure (17) et/ou la surface de sustentation inférieure (18) sont disposées entre l'axe de rotation des entraînements à hélice (12, 13) et l'envergure d'hélice maximale des hélices (14) et/ou **en ce que** la paire d'entraînements à hélice (12, 13) est disposée entre la surface de sustentation supérieure (17) et la surface de sustentation inférieure (18).

7. Missile selon l'une quelconque des revendications précédentes, **caractérisé en ce que** les hélices (14) des entraînements à hélice (12, 13) sont enveloppées au moins en partie dans la zone de la périphérie d'hélice par au moins une protection d'hélice (15).

8. Missile selon l'une quelconque des revendications précédentes, **caractérisé en ce que** l'élément de poids (20) est disposé au centre, sur la surface de sustentation (17), en particulier entre les entraînements à hélice (12, 13), l'élément de poids (20) étant de préférence relié à la surface de sustentation supérieure (17), logé en dessous de la surface de sustentation supérieure (17) et pouvant pivoter autour d'un axe transversal (22).

9. Missile selon l'une quelconque des revendications précédentes, **caractérisé par** une commande pour piloter le missile (10), en particulier au moyen d'une télécommande, l'attitude de vol par rapport à l'axe transversal (22) pouvant être réglée au moyen d'un déplacement de l'élément de poids (20).

10. Missile selon l'une quelconque des revendications précédentes, **caractérisé en ce que** des moyens de pilotage (23) et/ou des moyens d'alimentation en énergie (24) sont intégrés et/ou appliqués dans la surface de sustentation (17, 18) et/ou la voilure (16).

11. Utilisation d'un missile (10) selon l'une quelconque des revendications précédentes en tant que drone de reconnaissance télécommandé, des moyens de surveillance étant disposés de préférence sur le drone de reconnaissance.
